(19) Europäisches Patentamt
European Patent Office
Office européen des brevets

(11) Veröffentlichungsnummer: **0 034 272**
**B1**

(12) **EUROPÄISCHE PATENTSCHRIFT**

(45) Veröffentlichungstag der Patentschrift: **07.03.84**

(51) Int. Cl.³: **C 08 G 18/10,** D 06 N 3/14, D 06 N 3/00

(21) Anmeldenummer: **81100538.8**

(22) Anmeldetag: **26.01.81**

(54) **Verfahren zur Herstellung von Velourleder-Imitaten im Umkehrverfahren.**

(30) Priorität: **06.02.80 DE 3004327**

(43) Veröffentlichungstag der Anmeldung: **26.08.81 Patentblatt 81/34**

(45) Bekanntmachung des Hinweises auf die Patenterteilung: **07.03.84 Patentblatt 84/10**

(84) Benannte Vertragsstaaten: **AT BE CH DE FR GB IT LI NL**

(56) Entgegenhaltungen:
**EP-A-0 013 890**
**DE-A-1 621 910**
**DE-A-2 131 299**
**DE-A-2 252 280**
**FR-A-1 462 456**
**GB-A-1 085 454**
**US-A-3 533 895**
**US-A-3 755 261**
**US-A-3 861 937**

(73) Patentinhaber: **BAYER AG, Konzernverwaltung RP Patentabteilung, D-5090 Leverkusen 1 Bayerwerk (DE)**

(72) Erfinder: **Komarek, Ernst, Dr., Dresdener Strasse 6, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

Verfahren zur Herstellung von Velourlederimitaten im Umkehrverfahren

Die vorliegende Erfindung betrifft ein Verfahren zur Herstellung von velourlederartigen Materialien mit Hilfe von Beschichtungsmassen, die bei erhöhter Temperatur zu Hochmolekularen vernetzbar sind und die sich infolge eines speziellen Verlaufs ihrer Viskosität in Abhängigkeit von der Temperatur vor allem zum Umkehrbeschichten von Matrizen mit besonders tiefen und engen Vertiefungen eignen. Nach dem Abtrennen der Beschichtung von der Matrize erhält man so Flächengebilde mit langen, von der Oberfläche abstehenden Fasern, wie dies vor allem für Velourlederimitate erwünscht ist.

Es is Stand der Technik, Matrizen unterschiedlichster Art durch Rakeln oder Sprühen mit thermoplastischen Kunststoffen zu beschichten und nach dem Verdampfen eventuell verwendeter Lösemittel bzw., im Falle von Reaktivsystemen, nach der Härtungsreaktion von der Matrize abzunehmen. Man erhält so Beschichtungen, die das Abbild der Matrizenoberfläche als Negativ enthalten.

Als Matrizenmaterialien kommen beispielsweise alle üblichen geprägten Trennpapiere mit Oberflächen aus z.B. Polypropylen oder Silicon, Metalle, Siliconkautschukmassen oder Polyesterharzmassen in Frage.

Als Beschichtungssysteme werden bevorzugt thermoplastische oder auch z.B. mit Polyisocyanaten oder Melaminharzen vernetzbare, in Lösemitteln gelöste Polyurethane, PVC-Massen, die unterschiedlichen Weichmachergehalt aufweisen können, Polyamide und andere verwendet (US-PS Nr. 3861937). Für übliche Beschichtungen werden auch blockierte Zweikomponenten-Reaktivsysteme beschrieben, z.B. in der US-PS Nr. 3755261 die Aminhärtung von Polymeren oder Prepolymeren auf Basis von NCO-endständigen Urethanen, von Epoxyharzen, halogenhaltigen Kohlenwasserstoffpolymeren usw. mit feinverteilten Komplexen aus bestimmten aromatischen Diaminen und Salzen wie NaCl.

Weiterhin sind mit üblichen Blockierungsmitteln blockierte NCO-Prepolymere bekannt, z.B. nach der DE-OS Nr. 2131299 (US-PS Nr. 3770703) mit Caprolactam blockierte NCO-Prepolymere oder auch mit Malondialkylestern blockierte Prepolymere, die anschliessend mit tertiär-Aminogruppen-haltigen Polyolen vernetzt werden, in ihrem vorteilhaften Verhalten im Vergleich zu Phenol-blockierten NCO-Prepolymeren in der DE-OS Nr. 1621910 beschrieben. Nach der DE-OS Nr. 1519432 (US-PS Nr. 3267078) werden Ketoxim-blockierte NCO-Prepolymere mit Polyketiminen (d.h. mit Ketonen blockierten Polyaminen) vermischt, die bei Raumtepperatur in Gegenwart von Feuchtigkeit aushärten. In der GB-PS Nr. 1085454 werden Ketoxim-blockierte NCO-Prepolymere mit aliphatischen Diaminen zur Herstellung abriebbeständiger Überzüge bzw. Imprägnierungen von nonwovens, Leder und Holz beschrieben.

Obwohl diese beschriebenen Reaktivsysteme allgemein für die Verwendung zur Herstellung von Beschichtungen bekannt sind, so sind sie nicht für die Herstellung von Veloursledermitaten beschrieben, und es sind auch nicht die besonderen Bedingungen für die Herstellung solcher Veloursledermitate bekannt. Bei lösemittelfreien Beschichtungen geht man von Folien aus thermoplastischen Kunststoffen aus, die beim Erhitzen erweichen und so in die Vertiefungen der Matrizen einfliessen. Nach dem Erkalten erstarrt der Kunststoff, so dass auf diese Art wieder ein Negativabbild der Matrize an der Folienoberfläche wiedergegeben wird.

In der Regel werden mit Hilfe der beschriebenen Matrizen Oberflächen imitiert, wie sie bei Narbenledern üblich sind; selbstverständlich können jedoch auch andere Muster, z.B. textile Strukturen usw. abgebildet werden. Besonders schwierig ist es jedoch, auf diese Weise Veloursledermitate herzustellen. Matrizen, die von echtem Veloursleder oder auch von beflockten veloursartigen Materialien abgenommen werden, zeichnen sich dadurch aus, dass sie besonders enge und tiefe Näpfchen aufweisen, wodurch die langen Haare bzw. Fasern eines Veloursleders reproduziert werden können. In der US-PS Nr. 3533895 werden Folien aus löslichen thermoplastischen Polyurethanelastomeren bei hohen Temperaturen und hohem Druck in Silikonmatrizen eingeprägt. Die Trennung von der Form darf aber erst nach Abkühlung erfolgen und die Produkte sind 1 bis 2 d sehr druckempfindlich im Flor, ausserdem sehr lösungsmittelempfindlich. Daher hat man versucht, durch Nachbehandlung von solchen löslichen Polyurethanledern unter Aufsprühen verdünnter Lösungen polymerer Isocyanate, Trocknung bei 80°C und 3tägiges Stehenlassen bei Raumtemperatur eine verbesserte Thermostabilität zu erreichen (DGBM 7141380). Dieses Verfahren ist jedoch zu kompliziert, langwierig und wegen der Lösungsmittel nicht umweltfreundlich.

Die Herstellung von Matrizen und deren Verwendung im Umkehrbeschichtungsverfahren sind an sich bekannt. Sie werden z.B. in den US-PS Nrn. 3369949, 3655497 und 4124428 sowie in der DE-PS Nr. 1933255 beschrieben. Eine Schwierigkeit dieser Verfahren besteht jedoch darin, dass hochmolekulare thermoplastische Produkte in der Regel in die engen Vertiefungen solcher Matrizen nicht genügend gut eindringen. Verwendet man hingegen niederviskose Lösungen von Polymeren, so dringen diese Lösungen zwar gut in die tiefen Näpfchen ein, beim Verdampfen der Lösemittel entstehen jedoch Störstellen, welche die Wiedergabe eines schönen Velourscharakters beeinträchtigen. Durch eine gleichzeitig einsetzende Erhöhung der Viskosität unter Filmbildung werden diese Störstellen dann fixiert.

Bei der Reaktion nichtgeblockter Polyurethanreaktivsysteme, selbst mit hohem Feststoffgehalt wie z.B. 67 Gew.-%, wird ein ähnlich unbefriedigendes Ergebnis erzielt und es fehlt auch hier die Ausbildung des Flors und die stabile Entformbarkeit des Polyurethanvelours von der Matrize. Es liegt offenbar sowohl eine unvollständige Eindringung in die feinen Kapillaren durch das Polyurethan vor, als auch ein Haften und Abbrechen von feinen Velourshärchen beim Trennen des Polyurethans von der Matrize.

Entsprechend diesen Ergebnissen war anzunehmen, dass *high solids*-Reaktivsysteme mit blokkierten Ausgangsmaterialien entsprechende Schwierigkeiten bei der Trennung der innerhalb der feinen Matrizenkapillaren aushärtenden Reaktivpolyurethane ergeben würden. Überraschenderweise wurde jedoch gefunden, dass die erfindungsgemäss ausgewählten, erst durch Erhitzen zu einem Polyurethanharnstoff aushärtenden, nach Erhitzen lösungsmittelstabilen und vorzugsweise vernetzten Systeme auf der Basis blockierter Polyurethanausgangskomponenten bei Einhaltung der erfindungsgemässen Bedingungen sowohl feinste Details in der Matrize (wie feinste Velourshärchen) abformen können, als auch nach der Beendigung der Polyurethanbildung aus den Reaktivsystemen innerhalb der Matrize eine glatte und problemlose Ablösung des Polyurethanharnstoffs von der Matrize erlauben. Neben der detailgetreuen Abbildung der Matrizenvorlage und guter Entformbarkeit wird nach dem erfindungsgemässen Vorgehen auch eine homogene, gleichmässig dicke Rückseite des Polyurethanvelourmaterials erreicht, während mit den gleichen Materialien bei Nichteinhalten des Temperaturbereichs des Viskositätsminimums bei 30 bis 80°C vor Vernetzungsbeginn, sondern z.B. bei sofortiger Erwärmung auf hohe Ofentemperaturen wie 170°C inhomogene, blasen- und kraterhalige Veloursbeschichtungen erhalten werden.

Gegenstand der Erfindung ist somit ein Verfahren zur Herstellung von Flächengebilden mit veloursartiger Oberfläche durch Aufbringen einer Beschichtungspaste auf eine Matrize, deren Oberfläche als Negativ zu Veloursleder oder velourslederartigen Materialien ausgebildet ist, Verfestigung der Beschichtung durch Erhitzen, Abziehen der verfestigten Beschichtung von der Matrize und gegebenenfalls Kaschieren auf ein textiles Trägermaterial, dadurch gekennzeichnet, dass man

a) eine Beschichtungspaste eines erst durch Erhitzen zu einem Polyurethanharnstoff aushärtbaren Zweikomponentensystems auf Basis von entweder einem blockierten NCO-Präpolymeren und einem Polyamin oder einem NCO-Präpolymeren und einen Komplex aus einem Alkalihalogenid und einem aromatischen Polyamin sowie gegebenenfalls bis zu 40 Gew.-%, besser bis zu 30 Gew.-%, bevorzugt weniger als 25 Gew.-%, insbesondere weniger als 15 Gew.-%, an Lösemitteln, so dass die Beschichtungspaste eine Viskosität von maximal 100 000 mPa·s bei Raumtemperatur aufweist, aufträgt,

b) die Beschichtung auf eine Temperatur zwischen 30 und 80°C erwärmt, wobei die Viskosität der Beschichtungspaste ein Minimum durchläuft, welches maximal 30 000 mPa·s beträgt, und

c) die Beschichtung durch Erwärmen auf eine Temperatur oberhalb 90°C zum Polyurethan aushärtet.

Besonders gut eignen sich Beschichtungsmassen auf Basis blockierter, hitzehärtbarer Polyurethan-Zweikomponentensysteme, welche die folgenden Voraussetzungen erfüllen:

d) die Beschichtungsmassen müssen bei Reumtemperatur (ca. 17 bis 25°C) eine Viskosität von maximal 100 000 mPa·s, vorzugsweise 5000 bis 70 000 mPa·s aufweisen;

e) die Massen sollen beim Erhitzen auf Temperaturen von ca. 30 bis 80°C ein Viskositätsminimum von maximal 30 000, vorzugsweise unter 15 000, besonders bevorzugt zwischen 100 und 10 000 mPa·s durchlaufen;

f) der Gehalt der Beschichtungsmassen an Lösemitteln soll so gering wie möglich sein, um Störungen der Oberflächenbildung zu vermeiden; er soll nach Möglichkeit 30 Gew.-% nicht übersteigen und vorzugsweise unter 25%, insbesondere unter 15%, liegen, kann jedoch bei höherviskosen Ausgangsstoffen, wie z.B. bei aus mit aliphatischen Diisocyanaten aufgebauten NCO-Präpolymeren auch höher liegen und z.B. 40 Gew.-% betragen;

g) im oben angegebenen Temperaturbereich, in welchem die Viskosität ein Minimum durchläuft und die Beschichtungsmasse in die Vertiefungen der Matrize eindringt, soll im Beschichtungssystem noch keine merkliche Vernetzungsreaktion unter Bildung von Hochmolekularen ablaufen.

Die Temperaturen, bei der die Vernetzung beginnt, ist aus dem Viskositätsverlauf in Abhängigkeit von der Temperatur durch einen Anstieg der Viskosität gut zu erkennen. Bei einer weiteren Erhöhung der Temperatur der optimalen Vernetzung reagieren die Beschichtungsmassen unter Bildung von festen Hochmolekularen aus. Diese Endvernetzung erfolgt meist erst genügend schnell bei Temperaturen oberhalb 90°C, vorzugsweise zwischen 100 bis 180°C, besonders bei 100 bis 150°C, und nur bei den weniger reaktiven Systemen auf Basis aliphatischer Polyisocyanate bei ca. 150 bis 180°C, während kurzer Einwirkungszeit von weniger als 5 min.

Mittels der beanspruchten, hohe Feststoffgehalte von 60 bis 70%, vorzugsweise über 75 Gew.-%, besonders über 85 Gew.-%, enthaltenden Polyurethanreaktivsysteme, welche solche blockierte Reaktivgruppen aufweisen müssen, dass sie erst oberhalb von 90°C eine nennenswerte Aufbaureaktion eingehen und welche zusätzlich ein bestimmtes Temperaturviskositätsverhalten zeigen müssen, wurde ein Weg eröffnet, mit hervorragender Formtreue auch velourslederartige Matrizen fehlerfrei abzubilden und ein hochwertiges velourslederartiges Abgussmaterial zu erhalten. Neben der sehr hohen Feststoffkonzentration war es dazu wesentlich, dass solche blockierten Polyurethanreaktivsysteme — ausgehend von einer guten Streichviskosität — zunächst durch Erwärmen auf ca. 30 bis 80°C ein Viskositätsminimum durchlaufen, bei dieser niedrigen Viskosität erst vollständig die Matrize füllen und erst dann bei

weiterer Temperaturerhöhung zur Vernetzung ausreagieren (s. Viskositätskurven zu den Beispielen). Eine solche Vorgehensweise war keiner der zitierten Literaturstelle zu entnehmen.

Werden Polyurethanreaktivbeschichtungen verwendet, bei denen keiner der Reaktionspartner durch Blockierung in der Reaktivität gebremst ist, so werden Beschichtungen erhalten, die den gestellten Anforderungen nicht voll genügen. So wird z.B. mit einer Beschichtungsmasse aus nichtblockierten NCO-Prepolymeren und freien Aminen als Vernetzer auch ein veloursartiger Flor erhalten, der jedoch in seiner Oberfläche stark gestört ist. Solchen Massen müssen zur Senkung der Anfangsviskosität in der Regel höhere Lösungsmittelmengen zugesetzt werden. Die Vermischung muss in der Regel wegen der hohen Reaktivität der beiden Komponenten in einem Zweikomponentenmischkopf vor sich gehen, und das reagierende Gemisch wird in der Regel durch Sprühen aufgetragen. Zwangsweise ist bei diesem Sprühauftrag ein störender Anteil von Luftbläschen in der Beschichtungsmasse enthalten.

Ausserdem beginnt hier sofort nach dem Durchmischen der Reaktionspartner, folglich schon während des Auftragens auf die Matrize, die Reaktion, die zu einer raschen Erhöhung der Viskosität führt. Mit dem Einfliessen der Beschichtungsmasse in die tiefen Näpfchen geht hier bereits eine Vernetzung zeitlich einher, welche das Entweichen der in diesen Vertiefungen befindlichen Luft und der in der Beschichtungsmasse enthaltenden Lösemittel behindert und auch zu einer schnellen Filmbildung führt. Die Oberfläche der Beschichtung ist daher wegen einer schlechteren Abformung der Matrize weniger gut.

Das erfindungsgemässe Verfahren zur Erzeugung eines Flächengebildes mit velourslederartiger Oberfläche kann z.B. nach folgendem Schema erfolgen: Die Beschichtungsmasse wird bei Raumtemperatur durch ein übliches Streichwerk auf eine Matrize der beschriebenen Art (vorzugsweise eine Matrize gemäss US-PS Nr. 3369949 oder DE-PS Nr. 1933255) aufgerakelt. Zum Beispiel durch Bestrahlen der beschichteten Matrize mit üblichen Wärmestrahlern oder auch mittels eines in der Beschichtungsindustrie üblichen Heizkanals wird die Beschichtungsmasse nun auf die Temperatur gebracht, bei der sie ohne Vernetzung ihr Viskositätsminimum durchläuft. Anschliessend wird, z.B. durch stärkere Wärmestrahlung der beheizenden Strahler oder durch Einführen der beschichteten Matrize in einen heisseren Durchlaufkanal, die Beschichtung auf eine Temperatur gebracht, bei der die Aushärtungsreaktion erfolgt.

Diese Prozedur des Aufrakelns, der Viskositätserniedrigung und anschliessender Vernetzung unter Lösungsmittelentfernung kann ein- oder mehrfach vorgenommen werden. Nach dem Abkühlen wird die fertige Beschichtung von der Matrize abgenommen und gegebenenfalls durch eine geeignete Nachbehandlung in ihrem Erscheinungs- und Eigenschaftbild noch etwas korrigiert.

Als Beschichtungsmassen, die den erfindungsgemäss gestellten Anforderungen genügen, seien beispielhaft genannt:

1. Mit üblichen Blcokierungsmitteln blockierte NCO-Prepolymere, die mit Polyaminen vernetzt werden. Die Systeme können ca. 0 bis 40 Gew.-% an Lösemittel enthalten, wobei die Lösemittel als Verlaufhilfsmittel dienen können. Die Entblokkung der maskierten Isocyanate und damit die Härtungsreaktion mit den Aminen erfolgt innerhalb von wenigen Minuten, wenn man die Beschichtung auf Temperaturen oberhalb ca. 100°C, vorzugsweise oberhalb ca. 140°C, erhitzt.

2. Mischungen aus NCO-Prepolymeren mit einem Komplex aus Alkalihalogeniden und aromatischen Polyaminen, z.B. dem Kochsalzkomplex des 4,4'-Diaminodiphenylmethans, wie sie z.B. in der US-PS Nr. 3755261 beschrieben werden. Der Komplex zerfällt bei ca. 120°C in freies Kochsalz und freies Amin, wobei anschliessend das freigewordene Amin mit den Isocyanatgruppen des NCO-Prepolymeren unter Bildung eines Hochmolekularen reagiert. Auch hier kann zwecks Regulierung der Viskosität der Beschichtungsmasse beim Aufbringen auf die Matrize etwas Lösemittel zugegeben werden.

Für das erfindungsgemässe Verfahren bevorzugt sind Beschichtungsmassen der erstgenannten Art. Als besonders geeignet haben sich dabei hitzehärtbare Zweikomponentensysteme erwiesen, die folgende wesentliche Komponenten enthalten:

A) ein durchschnittlich 2 bis 4, vorzugsweise 2 bis 3, Ketoxim-blockierte aromatische NCO-Gruppen aufweisendes Vorpolymerisat mit einem durchschnittlichen Molekulargewicht von 1000 bis 15000, vorzugsweise 2000 bis 8000,

B) einen Vernetzer der Formel

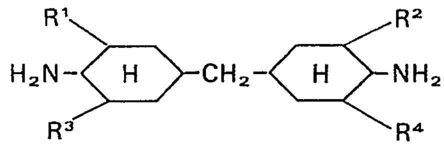

in welcher $R^1$, $R^2$, $R^3$ und $R^4$ unabhängig voneinander für Wasserstoff oder eine $C_1$ bis $C_3$-Alkylgruppe stehen, mit der Massgabe, dass das Diamin zu mindestens 75% aus dem cis, cis-Isomeren besteht, wenn $R^1$ bis $R^4$ alle Wasserstoff bedeuten, sowie gegebenenfalls

C) Pigmente, Füllstoffe, Treibmittel und weitere an sich bekannte Zusatzstoffe,

wobei das Äquivalentverhältnis von blockierten NCO-Gruppen zu $NH_2$-Gruppen zwischen 1,35:1 und 0,95:1, bevorzugt zwischen 1,25:1 und 1:1 liegt.

Für den Aufbau der NCO-Vorpolymerisate, die gegebenenfalls in die Ketoxim-blockierten NCO-Prepolymeren überführt werden, kommen vorzugsweise aromatische Polyisocyanate, wie sie eingehend in den US-PS Nrn. 3984607 und 4035213, in DE-OS Nr. 2402840 bzw. DE-AS Nr. 2557387 beschrieben sind, in Frage. Erfindungsgemäss bevorzugt sind 2,4'-bzw. 4,4'-Diisocyanatodiphenylmethan, die isomeren Toluylendiisocyanate sowie insbesondere Gemische dieser Diisocyanate. Ferner sind aliphatische oder cycloaliphatische Diisocyanate einsetzbar, z.B. Hexamethylendiisocyanat, Dicyclohexylmethan-4,4'-diisocyanat und Isophoron-diisocyanat (IPDI).

Als Reaktionspartner für diese Polyisocyanate zur Herstellung der NCO-Vorpolymerisate kommen Polyhydroxylverbindungen in Frage, die 2 bis 8, vorzugsweise 2 oder 3, Hydroxylgruppen aufweisen und ein Molekulargewicht von 500 bis 10000, vorzugsweise 1000 bis 6000, haben und wie sie im Detail ebenfalls in den oben genannten Publikationen beschrieben werden.

Bevorzugt als Reaktionspartner sind im Durchschnitt 2 bis 3 Hydroxylgruppen aufweisende Propylenoxidpolyäther, die auch Polyethylenoxideinheiten enthalten können, sowie unterhalb von 60°C schmelzende Hydroxypolyester mit 2 oder 3 endständigen OH-Gruppen und einem mittleren Molekulargewicht von 1000 bis 6000.

Besonders bevorzugt sind Mischungen der genannten Hydroxypolyäther mit Hydroxypolyestern aus Adipinsäure, Hexandiol-1,6 und Neopentylglykol vom mittleren Molekulargewicht 1000 bis 3000.

Bei der Herstellung der NCO-Vorpolymerisate können gegebenenfalls auch niedermolekulare Polyole mit einem Molekulargewicht von weniger als etwa 300 mitverwendet werden, wie sie als Kettenverlängerungsmittel an sich bekannt sind. Bevorzugt sind erfindungsgemäss in diesem Zusammenhang Butandiol-1,4, Di-(2-hydroxyethyl)methylamin und Trimethylolpropan.

Die Herstellung der NCO-Vorpolymerisate erfolgt in an sich bekannter Weise, indem man die genannten Polyhydroxylverbindungen mit überschüssigen aromatischen und/oder (cyclo-)-aliphatischen Polyisocyanaten, vorzugsweise Diisocyanaten, bei ca. 70 bis 110'C umsetzt. Man wählt hierbei im allgemeinen ein NCO/OH-Verhältnis von 6,0:1, vorzugsweise von 1,7:1 bis 2,5:1.

Als Blockierungsmittel für die NCO-Vorpolymerisate kommen z.B. Ketoxime aus Hydroxylamin und Ketonen wie Aceton, Methylethylketon, Diethylketon, Cyclohexanon, Acetophenon und Benzophenon in Frage.

Ein dafür bevorzugtes Blockierungsmittel ist Methylethylketoxim (Butanonoxim).

Die Blockierungsreaktion wird in der Weise durchgeführt, dass man das NCO-Vorpolymerisat mit stöchiometrischen Mengen an Ketoxim bei erhöhter Temperatur, z.B. 70 bis 100°C, bis zum Verschwinden der NCO-Gruppen umsetzt.

Es können — wenn auch weniger bevorzugt — andere übliche Blockierungsmittel wie Phenol, Caprolactam oder Malonester mitverwendet oder als alleinige Blockierungsmittel eingesetzt werden. Es können auch solche blockierte NCO-Prepolymere eingesetzt werden, bei denen nicht alle freien NCO-Gruppen in die blockierte Form überführt wurden, sondern nur ca. 75%, vorzugsweise $>$90%.

Die blockierten NCO-Vorpolymerisate können zwecks Einstellung der optimalen Verarbeitungsviskosität von 5000 bis 70000 mPa·s bei ca. 20°C mit kleinen Mengen an organischen Lösungsmitteln gemischt werden. Infolge des blockierten Charakters der NCO-Gruppen müssen hierbei nicht notwendigerweise gegenüber NCO-Gruppen inerte Lösemittel eingesetzt werden. Beispielsweise können Isopropanol, Ethylenglykolmonomethyl- bzw. Ethylenglykolmonoethyläther sowie deren Essigsäureester, Methylethylketon, Cyclohexanon, Butylacetat und DMF verwendet werden.

Als Vernetzerkomponente B für die blockierten NCO-Vorpolymerisate dient erfindungsgemäss vorzugsweise 4,4'-Diamino-3,3'-dimethyldicyclohexylmethan, ein bei Raumtemperatur flüssiges, aliphatisches Diamin mit sehr geringem Dampfdruck, das hervorragende Veloursleder mit trockenem Griff und hoher Florstabilität ergibt.

Weitere geeignete Vernetzer sind z.B. die entsprechenden homologen 3,3'-Diethyl-, Dipropyl- und Diisopropylderivate, das 1,1'-Diamino-3,3',5,5'-tetramethyldicyclohexylmethan bzw. das homologe Tetraethylderivat und 4,4'-Diamino-3,5-dimethyl-3',5'-diethyldicyclohexylmethan sowie auch andere aliphatische oder cycloaliphatische Diamine mit vorzugsweise geringerem Dampfdruck als 1,6-Hexandiamin.

Die Vermischung der blockierten NCO-Vorpolymerisate mit dem Diaminvernetzer erfolgt im allgemeinen etwa im Verhältnis der Äquivalentgewichte dieser Komponenten, obwohl für einige Anwendungszwecke auch eine Untervernetzung zweckmässig ist, so dass das Äquivalentverhältnis von blockiertem NCO zu $NH_2$ erfindungsgemäss im allgemeinen zwischen 1,35:1 und 0,95:1, bevorzugt 1,25:1 bis 1:1, liegt.

Zur Herstellung von gebrauchsfertigen Beschichtungsmassen können den hitzehärtbaren Reaktivgemischen an sich bekannte Zuschläge, nämlich Pigmente, UV-Stabilisatoren, Lichtschutzmittel, phenolische Antioxidantien, tert.-Aminstabilisatoren, Füllstoffe, 2,2,6,6-Tetramethylpiperidinderivate, Treibmittel oder Verlaufmittel, z.B. Silikonöle oder z.B. organofunktionelle Polydimethylsiloxane beigemischt werden.

Mit den hitzehärtbaren Reaktivgemischen können Beschichtungen auf allen in der Praxis üblichen Umkehrbeschichtungsanlagen hergestellt werden.

Die folgenden Beispiele dienen zur Erläuterung der vorliegenden Erfindung.

*Beispiel 1:*

a) *Herstellung eines blockierten NCO-Vorpolymerisats*

2000 g eines Polyäthers auf Basis von Trimethylolpropan und Propylenoxid mit einem Molekulargewicht von 6000, 1000 g eines linearen Polyäthers auf Basis von Propylenglykol und Propylenoxid mit einem Molekulargewicht von 1000, 1450 g eines linearen Polyesters aus 1,6-Hexandiol, Neopentylglykol und Adipinsäure (Molekulargewicht 1700) sowie 22,5 g Butandiol-1,4

werden mit 1125 g 4,4'-Diisocyanatodiphenylmethan und 174 g 2,4-Diisocyanatotoluol ca. 3 h lang bei 80 bis 90°C umgesetzt, bis der berechnete NCO-Gehalt von 4,26 Gew.-% knapp unterschritten ist. Anschliessend werden bei 60 bis 70°C 496 g Butanonoxim sowie 696 g Ethylenglykolmonomethylätheracetat rasch eingerührt. Nach 20 min ist IR-spektroskopisch kein NCO mehr nachweisbar. Das blockierte NCO-Vorpolymerisat, eine farblose, klare Flüssigkeit mit einer Viskosität von ca. 40000 mPa·s bei 20°C, hat einen bestimmbaren, latenten NCO-Gehalt von 3,3 Gew.-% und somit ein NCO-Äquivalentgewicht von 1280.

b) *Erfindungsgemässes Verfahren*

1280 g des Vorpolymerisats werden mit 119 g (d.h. einer äquimolaren Menge) 4,4'-Diamino-3,3'-dimethyldicyclohexylmethan vermischt. Ausserdem werden 10 Gew.-% (bezogen auf Gesamtgemisch) einer handelsüblichen Pigmentanreibung und 1 Gew.-% Silikonöl zugesetzt. Die Viskosität dieser anwendungsfertigen Paste beträgt bei Raumtemperatur ca. 40000 mPa·s.

Die Beschichtungsmasse wird auf eine Matrize, die gemäss US-PS Nr. 4124428 hergestellt wurde, im Rakelverfahren mit einer Auflage von ca. 200 g/m² aufgetragen. Die beschichtete Matrize wird nunmehr mit einer Bandgeschwindigkeit von ca. 9 m/min durch einen Heizkanal von 9 m Länge geführt, der auf eine Lufttemperatur von 80°C beheizt ist. Nach Durchlaufen dieses ersten Heizkanals wird die beschichtete Matrize in einen zweiten Kanal geführt, den sie bei gleicher Geschwindigkeit durchläuft. Dieser Heizkanal ist 18 m lang und wird auf einer Temperatur von 170°C gehalten. Nach dem Abkühlen wird die Beschichtung von der Matrize genommen und durch Unterkleben mit einem einseitig gerauhten Baumvollgewebe, wahlweise auch mit einem Mischgewebe aus Polyesterbaumwolle, mit einem Quadratmetergewicht von ca. 190 g verstärkt. Die Kaschierung erfolgt auf der glatten Seite der Beschichtung und der nicht gerauhten Gewebeseite mittels eines handelsüblichen Polyurethaneinkomponentensystems.

Der Veloureffekt wird durch Aufbürsten der Oberfläche mit den in der Textilindustrie üblichen Bürst- und Putzmaschinen verstärkt. Mittels an sich bekannter Hilfs- und Ausrüstungsverfahren kann der Velour noch stabilisert und in seinen Gebrauchseigenschaften verbessert werden. Es entsteht so ein textiles Flächengebilde mit verlourlederartiger Oberfläche, das z.B. als Schuhmaterial oder auch für Bekleidungszwecke dienen kann. Dieses Material zeichnet sich überraschenderweise auch dadurch aus, dass es eine Wasserdampfdurchlässigkeit von 0,5 bis 1,5 mg/cm²/h, gemessen nach IUP 15, aufweist. Durch eine Variation der zugesetzten Lösemittel lassen sich diese Werte beeinflussen und zum Teil noch übertreffen.

*Beispiel 2:*

Die in Beispiel 1 beschriebene Beschichtungsmasse wird wieder in üblicher Weise auf eine Matrize gemäss US-PS Nr. 4124428 aufgetragen. Die beschichtete Matrize durchläuft einen Trockenkanal von 18 m Länge in einer Geschwindigkeit von 5 m/min. Der Kanal ist stufenweise von 40°C bis auf 160°C erhitzt. Im ersten Teil des Trockenkanals wird das Viskositätsminimum der Beschichtungspaste durchlaufen, im zweiten Teil erfolgt die Vernetzungsreaktion. Nach dem Abkühlen der Beschichtung wird die Matrize entfernt. Der erhaltene Polyurethanfilm mit velourlederartiger Oberfläche wird auf der glatten Fläche mittels eines üblichen, in Lösemitteln gelösten Haftklebers mit einem glatten, nicht gerauhten Baumwolle- oder Polyesterbaumwolle- oder Polyester-Gewebe verklebt. Wie in Beispiel 1 beschrieben, können die Gebrauchseigenschaften durch Bürsten und Nachbehandeln beeinflusst und verbessert werden.

Das erhaltene velourlederartige Material dient z.B. zur Herstellung von Möbelbezugsstoffen.

*Beispiel 3:*

Eine Beschichtungsmasse, wie sie in Beispiel 1 von US-PS Nr. 3755261 beschrieben ist, wird auf die im Beispiel 1 verwendete Matrize mittels Rakelverfahren aufgebracht und die beschichtete Matrize wie in Beispiel 2 beschrieben erhitzt, wobei jedoch die letzte Zone des Kanals nur auf 140°C gehalten wird.

Nach dem Abnehmen der abgekühlten Beschichtung von der Matrize wird sie wie in Beispiel 1 beschrieben mit Textil unterklebt und weiterbehandelt.

In Fig. 1 ist der Viskositätsverlauf der in den Beispielen verwendeten Beschichtungsmassen in Abhängigkeit von der Temperatur dargestellt. Die ausgezogene Linie entspricht der Paste von den Beispielen 1 und 2, die strichlierte Linie jener von Beispiel 3.

*Beispiel 4:*

Ein NCO-Vorpolymerisat wird wie in Beispiel 1 beschrieben hergestellt, jedoch mit 655 g Caprolactam blockiert. Anschliessend werden sofort 645 g Ethylenglykolmonomethylätheracetat rasch eingerührt. Nach 30 min ist IR-spektroskopisch kein NCO mehr nachweisbar. Das blockierte Vorpolymerisat, eine weissliche trübe Flüssigkeit mit einer Viskosität von 50000 mPa·s bei 20°C, hat einen bestimmbaren, latenen NCO-Gehalt von 3,2 Gew.-% und ein NCO-Äquivalentgewicht von 1310.

Vor der Verarbeitung des weisslich trüben, inhomogen, griesigen Produktes ist eine Homogenisierung durch Erwärmung auf ca. 40 bis 50°C notwendig.

Wie in Beispiel 1 beschrieben, wird die Beschichtungsmasse auf eine Matrize aufgebracht und im ersten Heizkanal (90°C Lufttemperatur) mit einer Bandgeschwindigkeit von ca. 7 m/min durchgeführt. Nach Durchlaufen des ersten Heizkanales wird die beschichtete Matrize durch einen zweiten Kanal (Temperatur 190°C) mit gleicher Geschwindigkeit geführt. Danach wird wie in Beispiel 1 weiterverfahren.

Der Ausfall der nach Beispiel 4 hergestellten Beschichtung ist ähnlich Beispiel 1 und ist auch auf der Rückseite frei von Lufteinschlüssen. Die physikalischen Echtheiten sind vergleichbar. Die Beständigkeit gegenüber alkoholischen Lösungen, wie z.B. hochprozentigen alkoholischen Getränken, ist wie bei Beschichtungen gemäss Beispiel 1 generell gut, jedoch geringfügig schlechter als in Beispiel 1 bis 3.

*Beispiel 5:*

Ein NCO-Vorpolymerisat wird wie in Beispiel 1 beschrieben hergestellt, jedoch mit 1005 g Malonester (Malonsäurediäthylester) blockiert. Anschliessend wird sofort 675 g Ethylenglykolmonomethylätheracetat rasch eingerührt. Nach 30 min ist IR-spektroskopisch kein NCO mehr nachweisbar. Das blockierte NCO-Vorpolymerisat, eine farblose, klare Flüssigkeit mit einer Viskosität von 43 000 mPa·s bei 20° C, hatte einen bestimmbaren, latenten NCO-Gehalt von 3,0 Gew.-% und ein Äquivalentgewicht von 1400. Es wird wie in Beispiel 1 beschrieben weiterverfahren.

Die resultierende Beschichtung ist bezüglich Homogenität der Beschichtungsmasse mit der von Beispiel 1 vergleichbar. Die velourartige Oberfläche ist geringfügig weicher und angenehmer, in der Abriebbeständigkeit und in der Kratzfestigkeit jedoch etwas schlechter.

Die Beständigkeit gegenüber hochprozentigen alkoholischen Getränken ist gut, und auch in Lösungsmitteln wie Methylethylketon ist das Substrat unlöslich.

Die Velourleder, wie sie etwa nach den Beispielen 1, 4 und 5 erfindungsgemäss aus blockierten, hochfeststoffhaltigen Systemen zugänglich sind, zeigen einen weichen, langen Flor, der sich beim Bürsten nach verschiedenen Richtungen ausrichten lässt, wie dies von natürlichem Velourleder bekannt ist.

Dagegen werden aus verdünnten Lösungen von Polyurethanen nach dem Stand der Technik kurze, borstig rauhe, kurzflorige Velours minderer Qualität erhalten, die auch im Griff und im Schreibeffekt nicht mit den Velourleder Imitaten gemäss den Beispielen 1 bis 5 konkurrieren können.

## Patentansprüche

1. Verfahren zur Herstellung von Flächengebilden mit velourartiger Oberfläche durch Aufbringen einer Beschichtungspaste auf eine Matrize, deren Oberfläche als Negativ zu Velourleder oder velourartigen Materialien ausgebildet ist, Verfestigung der Beschichtung durch Erhitzen, Abziehen der verfestigten Beschichtung von der Matrize und gegebenenfalls Kaschieren auf ein textiles Trägermaterial, dadurch gekennzeichnet, dass man

a) eine Beschichtungspaste eines erst durch Erhitzen oberhalb 90° C genügend schnell zu einem Polyurethanharnstoff aushärtbaren Zweikomponentensystems auf Basis von entweder einem blockierten NCO-Präpolymeren und einem Polyamin oder einem NCO-Präpolymeren und einem Komplex aus einem Alkalihalogenid und einem aromatischen Polyamin, sowie gegebenenfalls bis zu 40 Gew.-% an Lösemittel, so dass die Beschichtungspaste eine Viskosität von maximal 100 000 mPa·s bei Raumtemperatur aufweist, aufträgt,

b) die Beschichtung auf eine Temperatur zwischen 30 und 80° C erwärmt, wobei die Viskosität der Beschichtungspaste ein Minimum durchläuft, welches maximal 30 000 mPa·s beträgt, wo die Beschichtungsmasse in die Vertiefungen der Matrize eindringt, bei dieser niedrigen Temperatur erst vollständig die Matrize füllt und im Beschichtungssystem noch keine merkliche Vernetzungsreaktion unter Bildung von Hochmolekularen abläuft, und

c) die Beschichtung durch Erwärmen auf eine Temperatur oberhalb 90° C zum Polyurethan aushärtet.

2. Verfahren nach Anspruch 1, dadurch gekennzeichnet, dass eine Beschichtungspaste eingesetzt wird, enthaltend

a) ein durchschnittlich 2 bis 4 Ketoxim-blokkierte aromatische NCO-Gruppen aufweisendes Vorpolymerisat mit einem durchschnittlichen Molekulargewicht von 1000 bis 15 000, und

b) einen Vernetzer der Formel

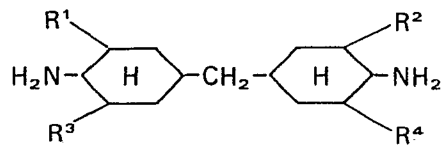

in welcher $R^1$, $R^2$, $R^3$ und $R^4$ unabhängig voneinander für Wasserstoff oder eine $C_1$-$C_3$-Alkylgruppe stehen, mit der Massgabe, dass das Diamin zu mindestens 75% aus dem cis, cis-Isomeren besteht, wenn $R^1$ bis $R^4$ alle Wasserstoff bedeuten, als wesentlichste Komponenten, sowie gegebenenfalls

c) Pigmente, Füllstoffe, Treibmittel, Stabilisatoren und Verlaufmittel,

wobei das Äquivalentverhältnis von blockierten NCO-Gruppen zu $NH_2$-Gruppen zwischen 1,35:1 und 0,95:1 liegt.

3. Verfahren nach Anspruch 2, dadurch gekennzeichnet, dass die Komponente A mit einem 2 bis 3 Hydroxylgruppen aufweisenden Polyether mit einem Molekulargewicht von 500 bis 10 000 und/oder einem 2 bis 3 Hydroxylgruppen aufweisenden Polyester mit einem Molekulargewicht von 1000 bis 6000 hergestellt worden ist.

4. Verfahren nach den Ansprüchen 2 und 3, dadurch gekennzeichnet, dass als Komponente 4,4'-Diamino-3,3'-dimethyldicyclohexylmethan verwendet wird.

5. Verfahren nach den Ansprüchen 1 bis 4, dadurch gekennzeichnet, dass man Silikonöle als Zusatzstoff verwendet.

6. Verfahren nach den Ansprüchen 1 bis 5, dadurch gekennzeichnet, dass bis zu 30 Gew.-% Lösungsmittel in der Beschichtungspaste verwendet werden.

7. Verfahren nach den Ansprüchen 1 bis 6, dadurch gekennzeichnet, dass die Beschichtungspaste a) bei Raumtemperatur eine Viskosität von 5000 bis 70 000 mPa·s aufweist und beim Erhitzen auf 30 bis 80° C ein Viskositätsmaximum zwischen 100 bis 10 000 mPa·s durchläuft.

8. Verfahren nach den Ansprüchen 1 bis 7, dadurch gekennzeichnet, dass die Beschichtungsmasse a) eine Endvernetzung bei einer Härtungstemperatur c) zwischen 100 und 180° C während einer Einwirkungszeit von weniger als 5 min ergibt.

9. Verfahren nach den Ansprüchen 1 bis 8, dadurch gekennzeichnet, dass der Gehalt der Beschichtungsmasse a) an Lösungsmitteln unter 15% liegt.

## Revendications

1. Procédé de préparation d'articles planiformes à surface du type velours par application d'une pâte de revêtement sur une matrice dont la surface présente en négatif l'aspect du cuir velours ou de matières analogues à du velours, solidification du revêtement par chauffage, séparation du revêtement solidifié d'avec la matrice et éventuellement application en doublage sur une matière de support textile, caractérisé en ce que

a) on applique une pâte de revêtement d'un système à deux composants qui ne durcit suffisamment rapidement en une polyuréthanne-urée que par chauffage au-dessus de 90° C, à base d'un prépolymère à groupes NCO bloqués et d'une polyamine ou d'un prépolymère à groupes NCO et d'un complexe d'un halogénure alcalin et d'une polyamine aromatique, et éventuellement jusqu'à 40% en poids de solvant, en sorte que la pâte de revêtement présente une viscosité de 100 000 mPa·s au maximum à température ambiante,

b) on chauffe le revêtement à une température de 30 à 80° C, la viscosité de la pâte de revêtement passant alors par un minimum qui est au maximum de 30 000 mPa·s et auquel la masse de revêtement pénètre dans les creux de la matrice, ne remplissant complètement la matrice qu'à cette basse température, sans qu'il apparaisse encore de réaction de réticulation notable avec formation de matières macromoléculaires dans le système de revêtement, et

c) on provoque le durcissement complet du revêtement en le polyuréthanne par chauffage à une température supérieure à 90° C.

2. Procédé selon la revendication 1, caractérisé en ce que l'on utilise une pâte de revêtement contenant

a) un prépolymère portant en moyenne 2 à 4 groupes NCO aromatiques bloqués par une cétoxime, à un poids moléculaire moyen de 1000 à 15 000 et

b) un réticulant de formule

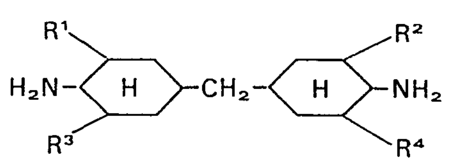

dans laquelle

$R^1$, $R^2$, $R^3$ et $R^4$ représentent chacun, indépendamment l'un de l'autre, l'hydrogène ou un groupe alkyle en $C_1$-$C_3$, étant spécifié que la diamine consiste pour au moins 75% en isomère cis, cis lorsque les symboles $R^1$ à $R^4$ représentent tous des atomes d'hydrogène,

en tant que composants les plus importants et éventuellement

c) des pigments, des matières de charge, des agents gonflants, des stabilisants et agents d'étalement,

le rapport entre les équivalents de groupes NCO bloqués et les équivalents de groupes $NH_2$ se situant entre 1,35:1 et 0,95:1.

3. Procédé selon la revendication 2, caractérisé en ce que le composant A) a été préparé avec un polyéther portant deux à trois groupes hydroxy et de poids moléculaire 500 à 10 000 et/ou un polyester portant 2 à 3 groupes hydroxy et de poids moléculaire 1000 à 6000.

4. Procédé selon les revendications 2 et 3, caractérisé en ce que l'on utilise en tant que composant B) le 4,4'-diamino-3,3'-diméthyl-dicyclohexylméthane.

5. Procédé selon les revendications 1 à 4, caractérisé en ce que l'on utilise en tant qu'additif C) des huiles de silicone.

6. Procédé selon les revendications 1 à 5, caractérisé en ce que l'on utilise jusqu'à 30% en poids de solvant dans la pâte de revêtement.

7. Procédé selon les revendications 1 à 6, caractérisé en ce que la pâte de revêtement a) présente à température ambiante une viscosité de 5000 à 70 000 mPa·s et traverse au chauffage à une température de 30 à 80° C un maximum de viscosité de 100 à 10 000 mPa·s.

8. Procédé selon les revendications 1 à 7, caractérisé en ce que la masse de revêtement a) donne une réticulation finale à une température de durcissement c) de 100 à 180° C en une durée d'action de moins de 5 min.

9. Procédé selon les revendications 1 à 8, caractérisé en ce que la teneur en solvant de la masse de revêtement a) est inférieure à 15%.

## Claims

1. Process for the production of sheet products having a suede-like surface by the application of a coating paste to a matrix whose surface has the form of a negative of suede or suede-like materials, solidification of the coating by heating, removal of the solidified coating from the matrix and optionally laminating it on to a textile material substrate, characterised in that

(*a*) a coating paste of a two-component system which can only be hardened sufficiently rapidly to form a polyurethane urea when heated to above 90° C and which is based either on a blocker NCO prepolymer and a polyamide or on an NCO prepolymer and a complex of an alkali metal halide and an aromatic polyamine, and, optionally, up to 40% by weight of a solvent, so that the coating paste has a viscosity of at most 100,000 mPa·s at room temperature, is applied,

(*b*) the coating is heated to a temperature between 30 and 80°C, during which step the viscosity of the coating paste passes through a minimum, which is at most 30,000 mPa·s, at which the coating composition penetrates into the depressions in the matrix, at this low temperature the matrix is first completely filled and still nosignificant cross-linking reaction to form high molecular weight products occurs, and

(*c*) the coating is hardened to form the polyurethane by heating to a temperature above 90°C.

2. Process according to claim 1, characterised in that a coating paste is used containing

(*a*) a prepolymer which has an average molecular weight of 1,000 to 15,000 and contains an average of 2 to 4 ketoxime-blocked aromatic NCO groups, and

(*b*) a cross-linking agent of the formula

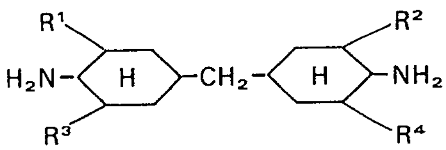

in which $R^1$, $R^2$, $R^3$ and $R^4$ independently of one another represent hydrogen or a $C_1$ to $C_3$-alkyl group, with the proviso that at least 75% of the diamine consists of the cis, cis-isomer when $R^1$ to $R^4$ all denote hydrogen,

as the most essential components, and, optionally,

(*c*) pigments, fillers, blowing agents/stabilisers and levelling agents,

the equivalent ratio of blocked NCO groups to $NH_2$ groups being betweeen 1.35:1 and 0.95:1.

3. Process according to claim 2, characterised in that component A has been prepared using a polyether having a molecular weight of 500 to 10,000 and containing 2 to 3 hydroxyl groups and/or a polyester having a molecular weight of 1,000 to 6,000 and containing 2 to 3 hydroxylgroups.

4. Process according to claims 2 and 3, characterised in that 4,4'-diamino-3,3'-dimethyl-dicyclohexyl methane is used as component b.

5. Process according to claims 1 to 4, characterised in that silicone oils are used as the additive c.

6. Process according to claims 1 to 5, characterised in that up to 30% by weight of solvent is used in the coating paste.

7. Process according to claims 1 to 6, characterised in that the coating paste a has a viscosity of 5,000 to 70,000 at room temperature and passes through a viscosity maximum of between 100 and 10,000 mPa·s on being heated to 30 to 80°C.

8. Process according to claims 1 to 7, characterised in that the coating composition a reaches final crosslinking at a hardening temperature c of between 100 and 180°C during a reaction time of less than 5 min.

9. Process according to claims 1 to 8, characterised in that the content of solvents in the coating composition a is lower than 15%.

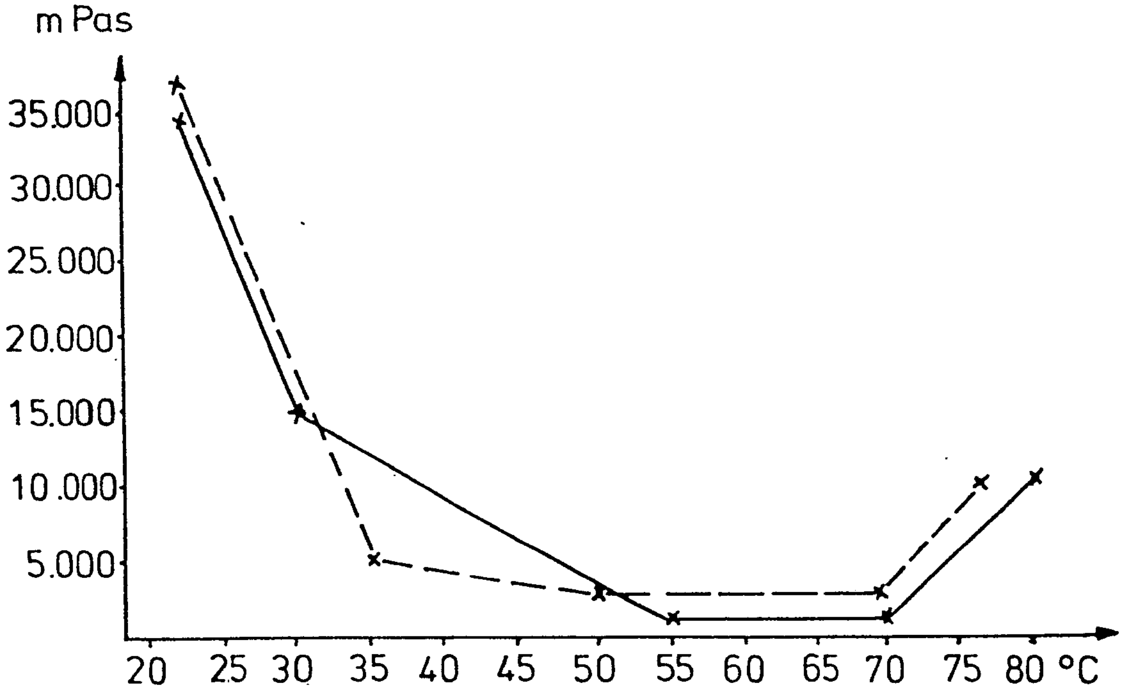
m Pas
35.000
30.000
25.000
20.000
15.000
10.000
5.000
20 25 30 35 40 45 50 55 60 65 70 75 80 °C

FIG. 1